# EUROPÄISCHE PATENTSCHRIFT

(11) **EP 2 091 297 B1**
(45) Veröffentlichungstag und Bekanntmachung des Hinweises auf die Patenterteilung: **12.09.2012**
(21) Anmeldenummer: 09152533.7
(22) Anmeldetag: 11.02.2009
(51) Int. Cl.: H04W 88/06, H04H 20/24

(54) **Mobilfunkendgerät für FLO- und MBMS/DVB-H-Multimediadienst**
Mobile radio terminal for FLO and MBMS/DVB-H multimedia service
Appareil radio mobile pour un service multimédia FLO et MBMS/DVB-H

(30) Priorität: 15.02.2008 DE 102008009485
(43) Veröffentlichungstag der Anmeldung: 19.08.2009
(73) Patentinhaber: Vodafone Holding GmbH, 40213 Düsseldorf (DE)
(72) Erfinder: Rodermund, Friedhelm, 40547, Düsseldorf (DE)
(74) Vertreter: Weisse, Renate

(56) Entgegenhaltungen:
- EP-A2- 1 670 159
- DE-A1-102007 027 022
- US-A1- 2005 153 650
- US-A1- 2007 197 174

## Beschreibung

### Technisches Gebiet

Die Erfindung betrifft ein Mobilfunkendgerät zur Kommunikation in einem Mobilfunknetz nach dem UMTS-Standard, aufweisend ein Modul zum Empfangen und Verarbeiten von Multimediadiensten nach dem FLO-Standard, ein Modul zum Empfangen und zum Verarbeiten von Multimediadiensten nach dem MBMS-Standard, eine Schaltvorrichtung, welche zwischen den Modulen für Multimediadienste, insbesondere unterbrechungsfrei, schaltet, und Triggermittel zur Steuerung der Schaltvorrichtung in Abhängigkeit von empfangener Funksignalstärke für das jeweilige Modul für Multimediadienste.

Weiterhin betrifft die Erfindung ein Mobilfunkendgerät zur Kommunikation in einem Mobilfunknetz nach dem UMTS-Standard, wobei ein Modul zum Empfangen und Verarbeiten von Multimediadiensten nach dem FLO-Standard, ein Modul zum Empfangen und zur Verarbeitung von Multimediadiensten nach dem DVB-H-Standard, eine Schaltvorrichtung, welche zwischen den Modulen für Multimediadienste, insbesondere unterbrechungsfrei, schaltet, und Triggermittel zur Steuerung der Schaltvorrichtung in Abhängigkeit von empfangener Funksignalstärke für das jeweilige Modul für Multimediadienste vorgesehen sind.

Ferner betrifft die Erfindung ein Verfahren für ein Mobilfunkendgerät in einem Mobilfunknetz nach dem UMTS-Standard, wobei das Mobilfunkendgerät ein Modul zum Empfangen und Verarbeiten von Multimediadiensten nach dem FLO-Standard aufweist, und das Verfahren ein Umschalten zwischen dem Modul für Multimediadienste nach dem FLO-Standard und einem Modul zum Empfangen und zur Verarbeitung von Multimediadiensten nach dem MBMS-Standard zur Auswahl mit einer Schaltvorrichtung umfasst, wobei die Auswahl nach der Stärke des Funksignals der Multimediadienste durch ein Triggermittel erfolgt.

### Stand der Technik

Als MediaFLO wird eine Technologie zum Übertragen von Fernsehsendungen und anderen Multimediadaten an eine Vielzahl von mobilen Empfängern gleichzeitig bezeichnet. Als Empfänger sind insbesondere Mobiltelefone und andere mobile Kommunikationsgeräte vorgesehen. MediaFLO ist ein zusammengesetztes Kunstwort aus Media und FLO, wobei FLO die Abkürzung für "Forward Link Only" darstellt.

MediaFLO wurde als komplettes Mobile-Broadeast-System von der amerikanischen Firma Qualcomm entwickelt und unterstützt insbesondere die Übertragung von hochauflösenden Video- und Audioströmen und anderen Multimediadaten auf mobile Endgeräte. Gegenüber konkurrierenden Systemen wird durch eine optimierte Ausnutzung bestehender Rundfunkkapazitäten eine höhere Bild- und Tonqualität bei geringerem Kostenaufwand angestrebt. Die MediaFLO zugrunde liegende, so genannte FLO-Technologie ist dem Fachmann aus Telecommunications Industry Association Standards TIA-1099, TIA 1102, TIA 1103 und TIA 1104 bekannt.

Digital Video Broadcasting - Handhelds (DVB-H), zu deutsch Digitaler Videorundfunk für Handgeräte ist ein weiterer Übertragungsstandard, mit dem digitale Rundfunkprogramme über mobile Geräte empfangen werden können. Mit DVB-H werden ebenfalls Multimediadienste, insbesondere Fernsehen, für Mobiltelefone und andere mobile Geräte über Rundfunk ausgesendet. Dabei wird DVB-H wie das digitale Antennenfernsehen DVB-T terrestrisch ausgesendet und baut auf dessen Technik auf.

Im Gegensatz zu DVB-T wird bei FLO und DVB-H die benötigte Leistungsaufnahme zum Empfangen von Daten z.B. durch ein Zeitmultiplexverfahren erheblich gesenkt. Dies wird unter anderem dadurch erreicht, dass Datenpakete, z.B. eines TV-Programms, zu vorhersehbaren Zeitpunkten versendet werden. Ein Empfänger kann sich in der Zwischenzeit abschalten, um Energie einzusparen. Deshalb eignet sich FLO und DVB-H besonders für kleine mobile Geräte mit Batterien, Akkumulatoren oder einer anderen leitungslosen bzw. mobilen Stromversorgung. Bei Mobilfunkendgeräten werden auch interaktive Dienste durch eine Nutzung eines Rückkanals auf der Basis von GPRS (General Packet Radio Service) oder UMTS (Universal Mobile Telecommunications System) ermöglicht.

Multimedia Broadcast Multicast Service (MBMS) ist eine Spezifikation für den Mobilfunkstandard UMTS, um insbesondere Multimediadaten wie Mobile-TV oder Dateien gleichzeitig an viele Nutzer zu übertragen. Der Vorteil gegenüber dem momentanen Verfahren bei UMTS, bei dem ein Datenstrom einzeln zu jedem Benutzer über eine Ende-zu-Ende-Verbindung gesendet wird, ist die deutlich geringere Netzlast, da die Daten nur einmal, und zwar zeitgleich an alle, übertragen werden. Dadurch werden Netzressourcen sowohl in einem Funkzugangsnetz als auch in einem Transportnetz innerhalb eines Mobilfunknetzes geschont.

Im Unterschied zu FLO oder DVB-H werden Daten bei dem MBMS nicht über eigene Frequenzen und Sender, sondern über ein Mobilfunknetz nach dem UMTS-Standard übertragen. Daher ergibt sich einen Mobilfunknetzbetreiber der Vorteil, dass er keine Frequenzen erwerben und keine neue Infrastruktur aufbauen muss, um Kunden mit digitalen Rundfunkdiensten zu versorgen. Weiterhin können die Dienste durch Ausnutzung der Zellstruktur von digitalen Mobilfunknetzen unkompliziert nur in räumlich eng begrenzten Gebieten, z.B. in einem Sportstadion, angeboten werden.

Nachteilig bei einem FLO-, einem MBMS- oder einem DVB-H-Multimediadienst ist, dass diese nicht von Beginn an flächendeckend zur Verfügung stehen werden und dass durch Funkschatten, beispielsweise durch Gebäude oder Geländeformationen, ein Empfang gestört werden kann. Daher ist häufig entweder nur der eine oder der andere Multimediadienst zu empfangen. Das wirkt sich besonders negativ bei sich bewegenden Benutzern eines Multimediadienstes aus, da es bei diesen zu plötzlich auftretenden Empfangsstörungen kommen kann. Ein Benutzer muss dann umständlich und langwierig manuell auf den anderen Multimediadienst oder auf einen herkömmlichen Multimediadienst (z.B. UMTS) zugreifen, um beispielsweise eine Rundfunksendung weiter zu verfolgen. Unterbrechungen werden aber besonders bei Fernsehprogrammen als äußerst störend empfunden und mindern so eine Akzeptanz und Nutzung der Multimediadienste.

Die US 2005/0153650 A1 beschreibt ein Mobilfunkendgerät und ein Verfahren zum Empfangen eines TV-Programms von einer Rundfunkstation. Bei einer Störung des Programms durch einen schlechten Empfang wird der Programminhalt über ein Mobilfunknetz von einem Programmdistributionscenter angefordert. Das Mobilfunkendgerät empfängt daraufhin das Programm über das Mobilfunknetz mittels einer Punkt-zu-Punkt-Verbindung und stellt dieses für einen Benutzer dar. Ein schlechter Empfang des Programms von der Rundfunkstation wird beispielsweise anhand der empfanden Funksignalstärke festgestellt.

In der US 2007/0197174 A1 wird ein Mobilfunkendgerät und ein Verfahren zum Empfangen eines TV-Programms nach dem FLO-Standard oder dem DVB-H-Standard dargestellt. Zusätzlich verfügt das Mobilfunkendgerät über eine Einheit zum Empfang von Programmen eines Multicast- und Broadeast-Service (MBS) über einen drahtlosen Intemetanschluss, wie z.B. ein WLAN-Hot-Spot. Je nach Empfangsqualität wird ein Programm entweder mit einer FLO-Einheit (bzw. DVB-H-Einheit) von der Rundfunkstation oder mit einer MBS-Einheit über den drahtlosen Internetanschluss empfangen und dargestellt.

Die EP 1670 159 A2 beschreibt ein weiteres System und ein Verfahren zum Empfangen eines TV-Programms oder anderer Daten durch ein Mobilfunkendgerät von einer DVB-H-Rundfunkstation oder mittels MBMS über ein Mobilfunknetz nach dem UMTS-Standard.

### Offenbarung der Erfindung

Aufgabe der Erfindung ist es daher, die Nachteile des Standes der Technik zu vermeiden und einen Multimediadienst, wie Fernsehen, für einen Nutzer eines Mobilfunkendgeräts nach dem UMTS-Standard räumlich möglichst großflächig anbieten zu können.

Erfindungsgemäß wird die Aufgabe dadurch gelöst, dass bei einem Mobilfunkendgerät zur Kommunikation in einem Mobilfunknetz nach dem UMTS-Standard der eingangs genannten Art mit einem ein Modul zum Empfangen und Verarbeiten von Multimediadiensten nach dem FLO-Standard und einem Modul zum Empfang und zur Verarbeitung von Multimediadiensten nach dem MBMS-Standard die Triggermittel zum Auslösen eines Schaltvorgangs durch die Schaltvorrichtung bei einem Unterschreiten einer bestimmten empfangenen Funksignalstärke des momentan verwendeten Moduls ausgebildet sind, und Mittel zur Erfassung und Beibehaltung eines Programmkanals nach dem Umschaltvorgang vorgesehen sind, wobei die Mittel zum Speichern eines empfangenen Programmkanals und zum Abfragen und Einstellen des Programmkanals in dem jeweils anderen Modul nach dem Schaltvorgang ausgebildet sind.

Weiterhin wird die Aufgabe dadurch gelöst, dass bei einem Mobilfunkendgerät der eingangs genannten Art zur Kommunikation in einem Mobilfunknetz nach dem UMTS-Standard mit einem Modul zum Empfangen und Verarbeiten von Multimediadiensten nach dem FLO-Standard und einem Modul zum Empfang und zur Verarbeitung von Multimediadiensten nach dem DVB-H-Standard die Triggermittel zum Auslösen eines Schaltvorgangs durch die Schaltvorrichtung bei einem Unterschreiten einer bestimmten empfangenen Funksignalstärke des momentan verwendeten Moduls ausgebildet sind, und Mittel zur Erfassung und Beibehaltung eines Programmkanals nach dem Umschaltvorgang vorgesehen sind, wobei die Mittel zum Speichern eines empfangenen Programmkanals und zum Abfragen und Einstellen des Programmkanals in dem jeweils anderen Modul nach dem Schaltvorgang ausgebildet sind.

Ferner wird die Aufgabe durch ein Verfahren für ein Mobilfunkendgerät in einem Mobilfunknetz nach dem UMTS-Standard der eingangs genannten Art gelöst durch Auslösen des Umschaltens durch das Triggermittel beim Unterschreitet einer bestimmten empfangenen Funksignalstärke des momentan verwendeten Moduls, und Speichern eines empfangenden Programmkanals und Abfragen und Einstellen des Programmkanals in dem jeweils anderen Modul nach dem Umschalten durch Mittel zur Erfassung und Beibehaltung eines Programmkanals.

Die Erfindung beruht grundsätzlich auf dem Prinzip, zum Empfang von Multimediadaten eines Multimediadienstes, wie beispielsweise eines Femsehprogramms, mit einem Mobilfunkendgerät ein FLO- und ein MBMS-Signal zu nutzen. Dazu enthält das Mobilfunkendgerät ein FLO-Modul zum Empfangen von Multimediadatenströmen über FLO und ein MBMS-Modul zum Empfangen von Multimediadatenströmen über MBMS. Alternativ oder zusätzlich ist statt des MBMS-Moduls ein DVB-H-Modul vorgesehen. Auch ein Modul zum Empfangen und Verarbeiten von Multimediadiensten über eine herkömmliche Ende-zu-Ende-Verbindung ist zusätzlich oder alternativ möglich.

Da die mobilen Broadcast Dienste FLO und MBMS eine unterschiedliche Flächenabdeckung besitzen, wird durch ein Mobxlfunkendgerät mit FLO- und MBMS-Funktionalität ein Empfang von Daten eines Multimediadienstes in einem wesentlich größeren Gebiet zur Verfügung gestellt. Damit ist mit dem Mobilfunkendgerät ein angebotener Multimediadienst, wie beispielsweise Fernsehprogramme, räumlich wesentlich großflächiger empfangbar. Weiterhin wird ein sich bewegender Benutzer bei einem Empfang eines Multimediadienstes erheblich weniger in seiner Mobilität eingeschränkt.

Entsprechend ist auch der DVB-H Dienst zunächst nicht flächendeckend ausgebildet oder wird durch Geländemerkmale eingeschränkt. Daher ist mit einem Mobilfunkendgerät mit DVB-H- und FLO-Funktionalität ein Empfang von Multimediadiensten vorteilhaft in einem wesentlich größeren Gebiet möglich. Auch mit dieser Maßnahme wird die Mobilität eines Benutzers beim Nutzen eines Multimediadienstes wesentlich erhöht.

Mit dem erfindungsgemäßen Verfahren wird ein Umschalten zwischen dem FLO- und dem MBMS-Modul ermöglicht. Da je nach Einsatzort des Mobilfunkendgeräts eventuell nur ein FLO- oder ein MBMS-Funksignal in ausreichender Stärke empfangen werden kann, wird das Mobilfunkendgerät durch ein Umschalten zwischen den Modulen in einem bedeutend größeren Gebiet zum Empfang eines Multimediadatenstroms einsetzbar. Außerdem wird durch die Möglichkeit zum Umschalten eine Auswahl des besser geeigneten oder stärker vorliegenden Funksignals und somit ein zuverlässiger und störungsfreier Empfang von Multimediadaten ermöglicht. Sollte das MBMS-Funksignal nicht zur Verfügung stehen, so kann alternativ oder in Kombination auf ein Modul umgeschaltet werden, welches einen Empfang über eine Ende-zu-Ende-Verbindung des UMTS ermöglicht. Während es sich bei dem MBMS-Funksignal um ein Signal handelt, welches von allen Teilnehmern mit entsprechenden Equipment empfangen werden kann, wird bei dem Modul zum Empfangen über eine individuelle Ende-zu-Ende-Verbindung ein separater Funkkanal bereitgestellt, über den der Multimediadienst empfangen werden kann.

Eine vorteilhafte Ausgestaltung des erfindungsgemäßen Mobilfunkendgeräts zur Kommunikation in einem Mobilfunknetz nach dem UMTS-Standard besteht darin, dass zwischen dem Modul zum Empfangen und Verarbeiten von Multimediadiensten nach dem FLO-Standard und dem Modul zum Empfang und zur Verarbeitung von Multimediadiensten nach dem MBMS-Standard eine Schnittstelle zur Datenübergabe vorgesehen ist. Über diese Schnittstelle wird zwischen den Modulen eine Kommunikation ermöglicht. Die Module können beispielsweise Befehle, Status- oder andere Informationen oder empfangene Daten austauschen. Damit wird ein gleichzeitiger Empfang von Multimediadaten durch beide Module wesentlich einfacher und effektiver koordinierbar und steuerbar. Zudem ist eine Vervollständigung von Daten, welche nur mangelhaft bzw. unvollständig von einem Modul empfangen wurden, durch vom anderen Modul empfangene Daten unkomplizierter möglich. Die Schnittstelle trägt somit wesentlich zu einer sicheren Übertragung von Multimediadaten bei.

Eine besonders vorteilhafte Ausbildung des erfindungsgemäßen Mobilfunkendgeräts wird durch eine Schaltvorrichtung, welche zwischen den Modulen für Multimediadienste unterbrechungsfrei schaltet, erzielt. Empfangene Multimediadatenströme werden beispielsweise mit dem Mobilfunkendgerät dargestellt, verarbeitet oder an andere Geräte weitergeleitet. Mit Hilfe der Schaltvorrichtung wird ohne Unterbrechung eines Datenstroms von einem Modul zum anderen geschaltet. Empfängt z.B. das eine Modul nur noch unvollständige oder überhaupt keine Daten eines Fernsehprogramms mehr, so wird mit der Schaltvorrichtung auf das andere Modul umgeschaltet und das Fernsehprogramm wird sehr benutzerfreundlich ohne Unterbrechung fortgesetzt. Ein Benutzer muss nicht mehr umständlich und zeitaufwendig manuell von einem Modul zum anderen schalten. Durch den komfortablen und ungestörten Empfang von Multimediadaten werden eine Akzeptanz und damit auch eine Nutzung dieser Dienste bedeutend erhöht.

Gemäß einer weiteren bevorzugten Ausbildung des erfindungsgemäßen Mobilfunkendgeräts sind Triggermittel zur Steuerung der Schaltvorrichtung in Abhängigkeit von empfangener Funksignalstärke für das jeweilige Modul für Multimediadienste vorgesehen. Mit den Triggermitteln wird beispielsweise ein Schaltvorgang durch die Schaltvorrichtung bei einem Unterschreiten einer bestimmten empfangenen Funksignalstärke des momentan verwendeten Moduls oder bei einer wesentlich besseren Funksignalstärke des gerade nicht verwendeten Moduls ausgelöst. Dadurch wird die Schaltvorrichtung sehr benutzerfreundlich automatisch gesteuert, um immer eine ausreichende Funksignalstärke für einen ungestörten Empfang von Multimediadatenströmen zu gewährleisten. Ein Benutzer kann sich vorteilhaft ganz auf die empfangenen Daten konzentrieren, ohne sich um eine Verwendung des am besten für einen Empfang geeigneten Moduls kümmern zu müssen.

Eine vorteilhafte Ausgestaltung des erfindungsgemäßen Mobilfunkendgeräts wird erreicht durch Zuschaltmittel, welche bei einem einstellbaren und/oder festen Wert für die Funksignalstärke des verwendeten Senders des Multimediadienstes den jeweils anderen Multimediadienst vor dem Umschalten durch die Schaltvorrichtung zuschaltet. Für eine Aktivierung eines FLO- oder MBMS-Moduls und einen Zugriff auf einen Multimediadienst durch ein solches Modul wird eine bestimmte Zeitspanne benötigt. Mit den Zuschaltmitteln wird bei einer Verschlechterung der Funksignalstärke rechtzeitig vor einem Erreichen einer ungenügenden Funksignalstärke das nicht benutzte Modul aktiviert und ein Zugriff auf einen Multimediadienst eingeleitet. Somit ist bei einer ungenügenden Funksignalstärke eine Umschaltung zwischen den Modulen ohne eine Verzögerung möglich. Ein Benutzer muss nicht permanent gleichzeitig über ein FLO-und ein MBMS-Modul bei einem Multimediadienst angemeldet sein. Dadurch spart der Benutzer Gebühren und verbraucht weniger Strom. Dies wirkt sich positiv auf die mobile Betriebsdauer des Mobilfunkendgeräts aus. Im Mobilfunknetz wird zudem eine Schonung von Netzwerkressourcen erreicht.

Eine weitere bevorzugte Ausbildung des erfindungsgemäßen Mobilfunkendgeräts wird durch ein Ortsbestimmungssystem zur Lokalisierung von Funksignalschatten des jeweils verwendeten Senders des Multimediadienstes erzielt. Das Ortsbestimmungssystem wird beispielsweise Satelliten- oder Funkzellen-basiert betrieben und dient primär zur Orts-und Bewegungsbestimmung des Mobilfunkendgeräts. Mit Hilfe der Orts- und Bewegungskoordinaten lässt sich z.B. schnell und zuverlässig bestimmen, ob sich das Mobilfunkendgerät momentan oder in naher Zukunft in einem Funksignalschatten des FLO- oder MBMS-Signals befindet oder befinden wird. So wird eine rechtzeitige und damit unterbrechungsfreie Umschaltung von dem eine Signal zum dem anderen zuverlässiger und einfacher möglich. Mit den momentanen Ortskoordinaten kann aber auch eine Umschaltung der Schaltvorrichtung verhindert werden, wenn der Funksignalschatten nur von sehr geringer Ausdehnung ist. Hierfür liegen dem Mobilfunkendgerät geeignete geographische Daten vor, die eine solche Analyse ermöglichen.

Ferner sind bei einer Ausgestaltung des erfindungsgemäßen Mobilfunkendgeräts zur Kommunikation in einem Mobilfunknetz nach dem UMTS-Standard vorteilhaft Mittel zur Erfassung und Beibehaltung eines Programmkanals nach dem Umschaltvorgang vorgesehen. Mit diesen Mitteln wird sichergestellt, dass während und nach einem Umschaltvorgang beispielsweise ein Radio- oder Fernsehprogramm beibehalten wird. Dies kann z.B. mit Hilfe eines Electronic Service Guide (ESG) nach dem OMA-Bicast-Standard verwirklicht werden. ESG steht sowohl bei FLO als auch bei MBMS zur Verfügung. Damit wird ein unterbrechungsfreier Konsum eines Programms ohne einen manuellen Eingriff für einen Benutzer komfortabel und zuverlässig ermöglicht. Der empfangene Programmkanal kann dazu beispielsweise gespeichert werden und nach dem Umschaltvorgang in dem jeweils anderen Modus wieder abgefragt und eingestellt werden.

Bei einer vorteilhaften Ausbildung des erfindungsgemäßen Verfahrens für ein Mobilfunkendgerät in einem Mobilfunknetz nach dem UMTS-Standard erfolgt die Auswahl nach der Stärke des Funksignals der Multimediadienste. Wie bei dem erfindungsgemäßen Mobilfunkendgerät wird dadurch beispielsweise ein Schaltvorgang bei einem Unterschreiten einer bestimmten empfangenen Funksignalstärke des momentan verwendeten Moduls oder bei einer wesentlich besseren Funksignalstärke des gerade nicht verwendeten Moduls ausgelöst. Damit wird ein Schaltvorgang automatisch und zuverlässig gesteuert, um eine ausreichende Funksignalstärke für einen ungestörten Empfang von Multimediadatenströmen zu erreichen. Für einen Benutzer bedeutet dies eine wesentliche Erleichterung, da er nicht mehr selber einen Schaltvorgang auslösen muss, um stets das am besten geeignete Modul für einen Empfang von Multimediadaten zu verwenden.

In einer weiteren bevorzugten Variante des erfindungsgemäßen Verfahrens für ein Mobilfunkendgerät erfolgt die Umschaltung zwischen den Modulen der Multimediadienste mit folgenden Verfahrenschritten unterbrechungsfrei: Zunächst wird die Funksignalstärke des verwendeten Multimediadienstes erfasst und anschließend festgestellt, ob die erfasste Funksignalstärke unter einem einstellbaren oder festen Wert liegt. Dann wird bei einer Unterschreitung der Funksignalstärke unter diesen Wert das Modul des jeweils anderen Multimediadienstes zugeschaltet. Schließlich erfolgt ein Umschalten mit der Schaltvorrichtung. Mit einer Verwendung der Funksignalstärke als Auslöser für eine Umschaltung wird automatisch immer eine ausreichende Funksignalstärke für einen ungestörten Empfang von Multimediadatenströmen erreicht. Für einen Benutzer wird somit ein störungs- und unterbrechungsfreies Betrachten bzw. Anhören von Multimediadaten, z.B. einem Fernsehprogramm, gewährleistet. Der Benutzer muss dabei vorteilhaft nicht selber eine richtige Auswahl des geeigneten Moduls vornehmen. Weiterhin wird durch ein Zuschalten des nicht benutzten Moduls unterhalb einer bestimmten Funksignalstärke ein Umschalten rechtzeitig vorbereitet, damit keine Unterbrechungen des Multimediadatenstroms während des Umschaltens auftreten. Da das nicht benutzte Modul erst kurz vor einer eventuellen Umschaltung aktiviert und angemeldet wird, werden Benutzergebühren eingespart und ein Energieverbrauch des Mobilfunkendgeräts niedrig gehalten. Dadurch steht das Mobilfunkgerät einem Benutzer mobil länger zur Verfügung. Weiterhin wird ein Mobilfunknetz durch weniger zu übermittelnde Daten geringer belastet.

Ferner werden bei einer Ausgestaltung des Verfahrens für ein Mobilfunkendgerät vorteilhaft mittels eines Ortsbestimmungssystems Funksignalschatten des jeweils verwendeten Senders des Multimediadienstes lokalisiert. Entsprechend dem erfindungsgemäßen Mobilfunkendgerät wird auch dieses Ortsbestimmungssystem beispielsweise Satelliten- oder Funkzellen-basiert betrieben. Mit Hilfe einer bekannten Position und Bewegung des Mobilfunkendgeräts lässt sich insbesondere das Auftreten von Funksignalschatten eines FLO- oder MBMS-Signals vorherbestimmen und eine eventuell notwendige Umschaltung einleiten. Dadurch wird vor allem auch bei einem schnellen Abfall der Funksignalstärke FLO- oder MBMS-Signals eine rechtzeitige und damit unterbrechungsfreie Umschaltung gewährleistet. Ein Benutzer kann so zuverlässiger und ohne Unterbrechung Multimediadaten empfangen und genießen.

Weitere Ausgestaltungen und Vorteile ergeben sich aus dem Gegenstand der Unteransprüche, sowie der Zeichnung mit der dazugehörigen Beschreibung.

Ein Ausführungsbeispiel der Erfindung ist nachstehend unter Bezugnahme auf die zugehörige Zeichnung näher erläutert.

### Kurze Beschreibung der Zeichnung

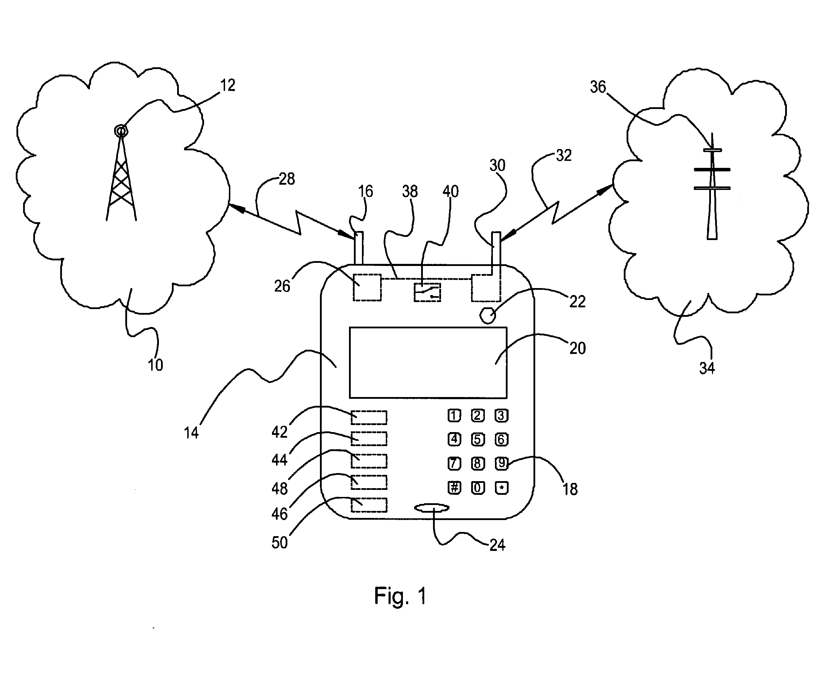

- Fig. 1: zeigt in einer schematischen Prinzipskizze ein Ausführungsbeispiel eines Mobilfunkendgeräts zur Kommunikation in einem Mobilfunknetz nach dem UMTS-Standard mit einem FLO- und einem MBMS-Modul zum Empfang von Daten eines Multimediadienstes.

### Bevorzugtes Ausführungsbeispiel

In Fig. 1 wird mit 10 ein Mobilfunknetz zur Kommunikation nach dem UMTS-Standard oder einem Standard der 4. Generation bezeichnet. Dem Fachmann sind solche Mobilfunknetze mit den entsprechenden Bestandteilen geläufig. Der Einfachheit halber wird das Mobilfunknetz 10 deshalb nur durch eine Wolke mit einem darin enthaltenen Funkmast 12 stilisiert dargestellt. Über das Mobilfunknetz 10 werden u. a. Multimediadienste, wie beispielsweise Fernseh- oder Radioprogramme für Benutzer angeboten. Dazu kann z.B. entweder ein Multimedia Broadcast Multicast Service (MBMS) oder eine herkömmlich, vorzugsweise paketorientierte UMTS-Verbindung verwendet werden.

Weiterhin wird in Fig. 1 mit 14 ein Mobilfunkendgerät zur Kommunikation über das Mobilfunknetz 10 bezeichnet. Das Mobilfunkendgerät 14 verfügt dazu über ein Mobilfunkmodul 16 zum Senden und Empfangen von Daten über das Mobilfunknetz 10. Das Mobilfunkendgerät 14 kann beispielsweise ein Mobiltelefon, Handy, Autotelefon, Smartphone, ein stationärer Rechner (z.B. PC) oder mobiler Rechner (z.B. Notebook, PDA) oder ein anderes Gerät mit einem eingebauten oder über eine Schnittstelle angeschlossenen Mobilfunkmodul 16 (z.B. eine PMCCIA-Karte) sein.

Zur Bedienung des Mobilfunkendgeräts 14 durch einen Benutzer ist eine Bedienungseinheit 18 vorgesehen. Mit einer Anzeige 20 werden empfangene oder zu sendende Daten dargestellt oder eine Bedienung durch einen Benutzer unterstützt. Ferner enthält das Mobilfunkendgerät 14 einen Akustikwandler 22 (z.B. ein Lautsprecher oder Kopfhörer) zum Umwandeln von elektronischen Signalen in akustische Signale.

Zusammen mit einem Mikrophon 24 wird so eine verbale Kommunikation und zusammen mit der Anzeige 20 eine Darstellung von Multimediadaten durch das Mobilfunkendgerät 14 ermöglicht.

Um einen MBMS-Dienst des Mobilfunknetzes 10 nutzen zu können, enthält das Mobilfunkendgerät 14 ein MBMS-Modul 26. Das MBMS-Modul 26 empfängt über das Mobilfunkmodul 16 und eine Funkverbindung, Pfeil 28, Multimediadaten von dem Mobilfunknetz 10 und bereitet diese zur Darstellung mit der Anzeige 20 und dem Akustikwandler 22 auf.

Weiterhin enthält das Mobilfunkendgerät 14 ein FLO-Modul 30 zum Empfang und zur Aufbereitung von Multimediadaten im FLO-Standard. Diese Multimediadaten werden als FLO-Funksignale, Pfeil 32, von Sendern auf bestimmten Frequenzen ausgestrahlt, wie es vom herkömmlichen digitalen terrestrischen Fernsehen (DVB-T) bekannt ist. Die dazu notwendige FLO-Sende-Infrastruktur 34 ist dem Fachmann bekannt und wird in Fig. 1 der Einfachheit halber als Wolke mit stilisiertem Funkturm 36 dargestellt.

Das FLO-Modul 30 ist über eine Schnittstelle 38 mit dem MBMS-Modul 26 verbunden. Über diese Schnittstelle 38 ist ein schneller und unkomplizierter Austausch von empfangenen Daten, Status- oder anderen Informationen oder Befehlen zwischen dem FLO-Modul 30 und dem MBMS-Modul 26 möglich. Eine in dem Mobilfunkendgerät 14 vorgesehene Schaltvorrichtung 40 dient zur Auswahl des FLO-Moduls 30 oder des MBMS-Moduls 26 als Quelle für darzustellende oder zu verarbeitende Multimediadatenströme. Die Schaltvorrichtung 40 erlaubt insbesondere ein Umschalten von einem Modul zum anderen Modul ohne dabei einen Datenstrom zu unterbrechen, falls beide Module den gleichen Datenstrom liefern.

Alternativ oder zusätzlich ist ein in Fig. 1 nicht dargestelltes Modul zum Empfangen von Multimediainhalten über eine herkömmliche Ende-zu-Ende-Verbindung des UMTS in dem Mobilfunkendgerät 14 vorgesehen. Auch dieses Modul ist über eine Schnittstelle mit den anderen Modulen 26, 30 verbunden. Mit der Schaltervorrichtung 40 wird das Modul für Multimediadaten über eine individuelle Ende-zu-Ende-Verbindung ebenfalls als Quelle für darzustellende oder zu verarbeitende Multimediadatenströme ausgewählt.

Die Schaltvorrichtung 40 ist mit Triggermitteln 42 automatisch steuerbar, beispielsweise in Abhängigkeit von einer FLO- oder MBMS-Funksignalstärke, einem Einsatzort des Mobilfunkendgeräts 14, einem Zeitpunkt oder einer Kombination dieser Parameter. Dazu sind vorzugsweise in dem Mobilfunkendgerät 14 oder alternativ in dem Mobilfunknetz 10 ein Ortbestimmungssystem 44 und ein Zeitgeber 46 vorgesehen. Das Ortbestimmungssystem kann beispielsweise mit Hilfe von Satelliten, Funkzellenpeilung oder beidem operieren. Mit dem Zeitgeber 46 ist auch eine Verzögerung einer Umschaltung der Schaltvorrichtung 40 möglich, um z.B. ein unnötiges Umschalten bei einer sehr kurzfristigen Funksignalstörung zu vermeiden.

Ferner enthält das Mobilfunkendgerät 14 Zuschaltmittel 48, um vor einer Umschaltung durch die Schaltvorrichtung 40 das jeweils nicht verwendete FLO- oder MBMS-Modul 26, 30 zu aktivieren und bei einem Multimediadienst anzumelden. Damit wird ein unterbrechungsfreies Umschalten gewährleistet, ohne dass beide Module 26, 30 permanent gleichzeitig betrieben werden müssen. Die Zuschaltmittel 48 sind ebenfalls in Abhängigkeit von einer FLO- oder MBMS-Funksignalstärke, einem Einsatzort des Mobilfunkendgeräts 14, einem Zeitpunkt oder einer Kombination dieser Parameter steuerbar, beispielsweise über die Triggermittel 42.

Um eine Beibehaltung eines Multimedia-Programms, insbesondere eines Fernseh- oder Radiokanals, während und nach einer Umschaltung durch die Schaltvorrichtung 40 sicherzustellen, beinhaltet das Mobilfunkendgerät 14 weitere Mittel 50 zur Programmerfassung und -beibehaltung. Dazu kann beispielsweise der von dem FLO-oder dem MBMS-Dienst bereitgestellte Electronic Service Guide (ESG) verwendet werden.

Möchte ein Benutzer einen Multimediadienst mit dem Mobilfunkendgerät 14 in Anspruch nehmen, so wählt er diesen mit Hilfe der Bedienungseinheit 18 aus. Das entsprechende Modul 26, 30 des Mobilfunkendgeräts 14 wird daraufhin aktiviert und gegebenenfalls eine Anmeldung bei dem Multimediadienst durchgeführt. Anschließend werden die empfangenen Multimediadaten auf der Anzeige 20 und mit dem Akustikwandler 22 für den Benutzer dargestellt. Mit der Schaltvorrichtung 40 und der Schnittstelle 38 kann der Benutzer über die Bedienungseinheit 18 während des Empfangs eines Multimediadatenstroms unkompliziert und ohne Unterbrechung des Datenstroms manuell auf einen anderen Dienst mit dem gleichen Datenstrom umschalten. Über die Schnittstelle 38 wird dabei eine Koordination des Schaltvorgangs ohne Datenverlust erreicht. Alternative Dienste werden dabei z.B. mit dem ESG ermittelt.

Wenn ein Benutzer beispielsweise ein Fernsehprogramm von einem FLO-Sender 34 empfängt und plötzlich Störungen auftreten, wird mit der Schaltvorrichtung 40 und der Schnittstelle 38 ein einfaches, zügiges und unterbrechungsfreies manuelle Umschalten auf einen MBMS-Dienst mit dem gleichen Fernsehprogramm möglich. Ist auch dieser gestört, so ist ferner eine Umschaltung zu einem herkömmlichen UMTS-Dienst durchführbar, um das Fernsehprogramm weiterhin zu empfangen.

Mit den Triggermitteln 42 wird sehr benutzerfreundlich ein automatisches Umschalten auf einen alternativen Multimediadienst mit dem gleichen Datenstrom, z.B. Fernsehprogramm, ausgeführt, wenn ein Abdeckungsbereich des benutzten Dienstes verlassen wird oder Störungen des Funksignals auftreten. Dazu wird mit den Triggermittel fortwährend die Funksignalstärke des verwendeten Dienstes ermittelt. Beim Unterschreiten eines von dem Benutzer oder einem Netzwerkbetreiber einstellbaren Wertes oder eines fest vorgegebenen Wertes wird mit den Zuschaltmitteln 48 ein alternativer Dienst aktiviert und ggf. angemeldet. Dieser Dienst wird ebenfalls beispielsweise aus dem ESG ermittelt. Sinkt die Signalstärke noch weiter ab, wird wiederum bei einem vom Benutzer oder Netzwerkbetreiber einstellbaren oder fest vorgegebenen Wert mit den Triggermitteln 42 eine Umschaltung durch die Umschaltvorrichtung ausgelöst. Die Umschaltung erfolgt dabei mit dem bereits aktivierten alternativen Dienst ohne Unterbrechung des Multimediadatenstroms. Dabei sorgen die Mittel zur Programmerkennung und -beibehaltung 50 dafür, dass ein Benutzer trotz Umschaltung ohne Unterbrechung oder manuellen Eingriff z.B. ein Fernsehprogramm weiter verfolgen kann.

Alternativ oder zusätzlich leiten die Triggermittel 42 auch eine Umschaltung mit Hilfe des Ortsbestimmungssystems 44 oder dem Zeitgeber 46 ein. Mit dem Ortsbestimmungssystem 44 wird ein voraussichtlicher Funksignalverlust durch Verlassen eines Abdeckungsbereichs oder Erreichen eines Funkschattens zuverlässig vorausberechnet. Eine rechtzeitige Umschaltung ist somit problemlos möglich. Der Zeitgeber 46 erlaubt beispielsweise bei zeitlich begrenzten Diensten ein rechtzeitiges Umschalten. Ferner kann der Zeitgeber 46 eine Steuerung des gesamten Umschaltvorgangs unterstützen. Auch ist eine Verzögerung der Umschaltung durch den Zeitgeber 46 möglich, um bei einer kurzzeitigen Störung des Empfangs ein nicht notwendiges Umschalten zu vermeiden. Neben den bereits genanten Parametern (Funksignalstärke, Ort, Zeit) ist eine Verwendung von weiteren Parametern, wie z.B. eine Datenintegrität oder Prüfsummen, zur Auslösung einer Umschaltung denkbar.

In einer alternativen Ausführung ist statt des MBMS-Modul 26 ein Modul zum Empfangen und Verarbeiten von Multimediaströmen nach dem DVB-H-Standard vorgesehen. Auch in dieser Ausführung wird durch eine entsprechende Schnittstelle und eine Schaltervorrichtung ein Umschalten zwischen den Modulen als Quelle für darzustellende Multimediadaten ermöglicht. Dazu sind wiederum Triggermittel zur Steuerung der Schaltvorrichtung vorgesehen. Wie bereits oben beschrieben, lösen die Triggermittel in Abhängigkeit von der Funksignalstärke, des Ortes oder der Änderung der Funksignalstärke zunächst eine Aktivierung alternativer Dienste und anschließend, falls notwendig, eine Umschaltung aus.

Mit dem Mobilfunkgerät 14 und dem entsprechenden Verfahren wird ein automatischer Handover zwischen einem FLO-, einem MBMS- und einem herkömmlichen UMTS-Multimediadienst zur Verfügung gestellt. Für einen Benutzer wird damit sehr vorteilhaft eine großflächige Bereitstellung von Multimediadatenströmen verwirklicht, wobei die Multimediadaten ohne sehr lästige Unterbrechungen betrachtet werden können. Dies bedeutet eine deutliche Steigerung der Akzeptanz und Nutzung dieser Dienste.

### Bezugszeichenliste

- 10: Mobilfunknetz
- 12: Funkmast
- 14: Mobilfunkendgerät
- 16: Mobilfunkmodul
- 18: Bedienungseinheit
- 20: Anzeige
- 22: Akustikwandler
- 24: Mikrophon
- 26: MBMS-Modul
- 28: Pfeil (UMTS-Verbindung)
- 30: FLO-Modul
- 32: Pfeil (FLO-Funksignal)
- 34: FLO-Sende-Infrastruktur
- 36: Funkturm
- 38: Schnittstelle
- 40: Schaltvorrichtung
- 42: Triggermittel
- 44: Ortsbestimmungssystem
- 46: Zeitgeber
- 48: Zuschaltmittel
- 50: Mittel (Programmbeibehaltung)

## Patentansprüche

1. Mobilfunkendgerät (14) zur Kommunikation in einem Mobilfunknetz (10) nach dem UMTS-Standard, aufweisend ein Modul (30) zum Empfangen und Verarbeiten von Multimediadiensten nach dem FLO-Standard, ein Modul (26) zum Empfangen und zum Verarbeiten von Multimediadiensten nach dem MBMS-Standard:, eine Schaltvorrichtung (40), welche zwischen den Modulen (26, 30) für Multimediadienste, insbesondere unterbrechungsfrei, schaltet, und Triggermittel (42) zur Steuerung der Schaltvorrichtung (40) in Abhängigkeit von empfangener Funksignalstärke für das jeweilige Modul (26, 30) für Multimediadienste, **dadurch gekennzeichnet, dass** die Triggermittel zum Auslösen eines Schaltvorgangs durch die Schaltvorrichtung (40) bei einem Unterschreiten einer bestimmten empfangenen Funksignalstärke des momentan verwendeten Moduls ausgebildet sind, und Mittel (50) zur Erfassung und Beibehaltung eines Programmkanals nach dem Umschaltvorgang vorgesehen sind, wobei die Mittel (50) zum Speichern eines empfangenen Programmkanals und zum Abfragen und Einstellen des Programmkanals in dem jeweils anderen Modul nach dem Schaltvorgang ausgebildet sind.

2. Mobilfunkendgerät (14) zur Kommunikation in einem Mobilfunknetz (10) nach dem UMTS-Standard nach Anspruch 1, dadurch gekennzeichneet, dass zwischen dem Modul (30) zum Empfangen und Verarbeiten von Multimediadiensten nach dem FLO-Standard und dem Modul (26) zum Empfang und zur Verarbeitung von Multimediadiensten nach dem MBMS-Standard eine Schnittstelle (38) zur Datenübergabe vorgesehen ist.

3. Mobilfunkendgerät (14) zur Kommunikation in einem Mobilfunknetz (10) nach dem UMTS-Standard nach einem der Ansprüche 1 bis 2, **gekennzeichnet durch** Zuschaltmittel (48), welche bei einem einstellbaren und/oder festen Wert für die Funksignalstärke des verwendeten Senders (10, 34) des Multimediadienstes das jeweils nicht benutzte Modul des anderen Multimediadienstes vor dem Umschalten durch die Schaltvorrichtung (40) aktiviert und eine Zugriff auf den anderen Multimediadienst einleitet.

4. Mobilfunkendgerät (14) zur Kommunikation in einem Mobilfunknetz (10) nach dem UMTS-Standard nach einem der Ansprüche 1 bis 3, **gekennzeichnet durch** ein Ortsbestimmungssystem (44) zur Lokalisierung von Funksignalschatten des jeweils verwendeten Senders (10, 34) des Multimediadienstes.

5. Mobilfunkendgerät (14) zur Kommunikation in einem Mobilfunknetz (10) nach dem UMTS-Standard, wobei ein Modul (30) zum Empfangen und Verarbeiten von Multimediadiensten nach dem FLO-Standard, ein Modul zum Empfangen und zur Verarbeitung von Multimediadiensten nach dem DVB-H-Standard, eine Schaltvorrichtung (40), welche zwischen den Modulen (26, 30) für Multimediadienste, insbesondere unterbrechungsfrei, schaltet, und Triggermittel (42) zur Steuerung der Schaltvorrichtung (40) in Abhängigkeit von empfangener Funksignalstärke für das jeweilige Modul (26, 30) für Multimediadienste vorgesehen sind, **dadurch gekennzeichnet, dass** die Triggermittel zum Auslösen eines Schaltvorgangs durch die Schaltvorrichtung (40) bei einem Unterschreiten einer bestimmten empfangenen Funksignalstärke des momentan verwendeten Moduls ausgebildet sind, und Mittel (50) zur Erfassung und Beibehaltung eines Programmkanals nach dem Umschaltvorgang vorgesehen sind, wobei die Mittel (50) zum Speichern eines empfangenen Programmkanals und zum Abfragen und Einstellen des Programmkanals in dem jeweils anderen Modul nach dem Schaltvorgang ausgebildet sind.

6. Verfahren für ein Mobilfunkendgerät (14) in einem Mobilfunknetz (10) nach dem UMTS-Standard, wobei das Mobilfunkendgerät (14) ein Modul (30) zum Empfangen und Verarbeiten von Multimediadiensten nach dem FLO-Standard aufweist, und das Verfahren ein Umschalten zwischen dem Modul (30) für Multimediadienste nach dem FLO-Standard und einem Modul (26) zum Empfangen und zur Verarbeitung von Multimediadiensten nach dem MBMS-Standard zur Auswahl mit einer Schaltvorrichtung (40) umfasst, wobei die Auswahl nach der Stärke des Funksignals (28, 32) der Multimediadienste durch ein Triggermittel (42) erfolgt, **gekennzeichnet durch** Auslösen des Umschaltens **durch** das Triggermittel (42) beim Unterschreiten einer bestimmten empfangenen Funksignalstärke des momentan verwendeten Moduls, und Speichern eines empfangenen Programmkanals und Abfragen und Einstellen des Programmkanals in dem jeweils anderen Modul nach dem Umschalten **durch** Mittel (50) zur Erfassung und Beibehaltung eines Programmkanals.

7. Verfahren für ein Mobilfunkendgerät (14) in einem Mobilfunknetz (10) nach dem UMTS-Standard nach Anspruch 6, **dadurch gekennzeichnet, dass** die Umschaltung zwischen den Modulen (26, 30) der Multimediadienste mit folgenden Verfahrenschritten unterbrechungsfrei erfolgt:
a) Erfassen der Funksignalstärke des verwendeten Multimediadienstes,
b) Feststellen, ob die so erfasste Funksignalstärke unter einem einstellbaren oder festen Wert liegt,
c) Zuschalten des Moduls (26, 30) des jeweils anderen Multimediadienstes bei Unterschreitung der Funksignalstärke unter diesen Wert,
d) Umschalten der Schaltvorrichtung (40).

8. Verfahren für ein Mobilfunkendgerät (14) in einem Mobilfunknetz (10) nach dem UMTS-Standard nach einem der Ansprüche 6 oder 7, **dadurch gekennzeichnet, dass** mittels Ortsbestimmungssystem (44) Funksignalschatten des jeweils verwendeten Senders (10, 34) des Multimediadienstes lokalisiert werden.

## Claims

1. A mobile radio terminal (14) for communication in a mobile radio network (10) according to the UMTS standard, comprising a module (30) for receiving and processing of multimedia services in accordance with the FLO standard, a module (26) for receiving and processing of multimedia services in accordance with the MBMS standard, a switching device (40) which switches between the modules (26, 30) for multimedia services, in particular without interruption, and trigger means (42) for controlling the switching device (40) in dependency of the received radio signal strength for the respective module (26, 30) for multimedia services, **characterized in that** the trigger means are adapted for triggering a switching operation by the switching device (40) on falling below a certain received radio signal strength of the currently used module, and means (50) for detecting and maintaining a program channel after the switching operation are provided, wherein the means (50) are adapted for storing a received program channel and for requesting and setting the program channel in the other module after the switching operation.

2. A mobile radio terminal (14) for communication in a mobile radio network (10) according to the UMTS standard as claimed in claim 1, **characterized in that** an interface (38) for data transfer is provided between the module (30) for receiving and processing of multimedia services in accordance with the FLO standard and the module (26) for receiving and processing of multimedia services in accordance to the MBMS standard.

3. A mobile radio terminal (14) for communication in a mobile radio network (10) according to the UMTS standard as claimed in one of claims 1 to 2, **characterized by** switching means (48) which respectively activate the not used module of the other multimedia service before switching by the switching device (40) and initiates an access to the other multimedia service at an adjustable and / or fixed value for the radio signal strength of the used transmitter (10, 34) of the multimedia service.

4. A mobile radio terminal (14) for communication in a mobile radio network (10) according to the UMTS standard as claimed in one of claims 1 to 3, **characterized by** a location determining system (44) for localization of radio signal shadows of the respectively used transmitter (10, 34) of the multimedia service.

5. A mobile radio terminal (14) for communication in a mobile radio network (10) according to the UMTS standard, wherein a module (30) for receiving and processing of multimedia services in accordance with the FLO standard, a module for receiving and processing of multimedia services according to the DVB-H standard, a switching device (40) which switches between the modules (26, 30) for multimedia services, in particular without interruption, and trigger means (42) for controlling the switching device (40) in dependency of the received radio signal strength of the respective module (26, 30) for multimedia services are provided, **characterized in that** the trigger means are adapted for triggering a switching operation by the switching device (40) on falling below a certain received radio signal strength of the currently used module, and means (50) for detecting and maintaining a program channel after the switching operation are provided, wherein the means (50) are adapted for storing a received program channel and for requesting and setting the program channel in the other module after the switching operation.

6. A method for a mobile radio terminal (14) in a mobile radio network (10) according to the UMTS standard, wherein the mobile radio terminal (14) comprises a module (30) for receiving and processing of multimedia services in accordance with the FLO-standard, and said method comprising a switching between the module (30) for multimedia services according to the FLO-standard and a module (26) for receiving and processing of multimedia services in accordance with the MBMS standard for selection by a switching device (40), wherein the selection based on the strength of the radio signal (28, 32) of the multimedia services is carried out by a trigger means (42), **characterized by** triggering the switching by the trigger means (42) on falling below a certain received radio signal strength of the currently used module, and storing a received program channel and requesting and setting the program channel in the other module after the switching operation by means (50) for detecting and maintaining a program channel.

7. A method for a mobile radio terminal (14) in a mobile radio network (10) according to the UMTS standard as claimed in claim 6, **characterized in that** the switching between the modules (26, 30) of the multimedia services comprises the following steps carried out without interruption:
a) detecting the radio signal strength of the used multimedia service,
b) determining whether the detected radio signal strength is below an adjustable or fixed value,
c) switching on in addition the module (26, 30) of the other multimedia services if the radio signal strength falls below this value,
d) switching by the switching device (40).

8. A method for a mobile radio terminal (14) in a mobile radio network (10) according to the UMTS standard as claimed in one of claims 6 or 7, **characterized in that** radio signal shadows of the respectively used transmitter (10, 34) of the multimedia service are localized by means of a location determining system (44).

## Revendications

1. Terminal de radiotéléphonie mobile (14) destiné à la communication dans un réseau de radiotéléphonie mobile (10) d'après le standard UMTS, présentant un module (30) destiné à la réception et au traitement de services multimédia d'après le standard FLO, un module (26) destiné à la réception et au traitement de services multimédia d'après le standard MBMS, un dispositif de commutation (40) commutant entre les modules (26, 30) pour services multimédia, notamment sans interruption, et des moyens de déclencheur (42) destinés à la commande du dispositif de commutation (40) en fonction de l'intensité des signaux radio reçus pour le module respectif (26, 30) pour services multimédia, **caractérisé en ce que** les moyens de déclencheur sont configurés de manière à déclencher un processus de commutation effectué par le dispositif de commutation (40) en cas d'une certaine intensité de signaux radio reçus trop faible du module utilisé momentanément, et des moyens (50) sont prévus pour la saisie et la conservation d'un canal de programme après le processus de commutation, les moyens (50) étant configurés de manière à mémoriser un canal de programme reçu et à interroger et régler le canal de programme dans l'autre module correspondant après le processus de commutation.

2. Terminal de radiotéléphonie mobile (14) destiné à la communication dans un réseau de radiotéléphonie mobile (10) d'après le standard UMTS selon la revendication 1, **caractérisé en ce qu'**une interface (38) destinée au transfert des données est prévue entre le module (30) destiné à la réception et au traitement des services multimédia d'après le standard FLO et le module (26) destiné à la réception et au traitement de services multimédia d'après le standard MBMS.

3. Terminal de radiotéléphonie mobile (14) destiné à la communication dans un réseau de radiotéléphonie mobile (10) d'après le standard UMTS selon l'une quelconque des revendications 1 à 2, **caractérisé par** des moyens d'activation (48) activant le module correspondant non utilisé de l'autre service multimédia avant la commutation effectuée par le dispositif de commutation (40) en cas de valeur réglable et/ou fixe pour l'intensité des signaux radio de l'émetteur utilisé (10, 34) du service multimédia et initialisant l'accès à l'autre service multimédia.

4. Terminal de radiotéléphonie mobile (14) destiné à la communication dans un réseau de radiotéléphonie mobile (10) d'après le standard UMTS selon l'une quelconque des revendications 1 à 3, **caractérisé par** un système de détermination du lieu (44) destiné à localiser les zones d'ombres de réception des signaux radio de l'émetteur correspondant utilisé (10, 34) du service multimédia.

5. Terminal de radiotéléphonie mobile (14) destiné à la communication dans un réseau de radiotéléphonie mobile (10) d'après le standard UMTS, prévoyant un module (30) destiné à la réception et au traitement de services multimédia d'après le standard FLO, un module destiné à la réception et au traitement de services multimédia d'après le standard DVB-H, un dispositif de commutation (40) commutant entre les modules (26, 30) pour services multimédia, notamment sans interruption, et des moyens de déclencheur (42) destinés à la commande du dispositif de commutation (40) en fonction de l'intensité des signaux radio reçus pour le module respectif (26, 30) pour services multimédia, **caractérisé en ce que** les moyens de déclencheur sont configurés de manière à déclencher un processus de commutation effectué par le dispositif de commutation (40) en cas d'une certaine intensité de signaux radio reçus trop faible du module utilisé momentanément, et des moyens (50) sont prévus pour la saisie et la conservation d'un canal de programme après le processus de commutation, les moyens (50) étant configurés de manière à mémoriser un canal de programme reçu et à interroger et régler le canal de programme dans l'autre module correspondant après le processus de commutation.

6. Procédé pour terminal de radiotéléphonie mobile (14) dans un réseau de radiotéléphonie mobile (10) d'après le standard UMTS, le terminal de radiotéléphonie mobile (14) présentant un module (30) destiné à la réception et au traitement de services multimédia d'après le standard FLO, et le procédé comprenant une commutation entre le module (30) pour services multimédia d'après le standard FLO et un module (26) destiné à la réception et au traitement de services multimédia d'après le standard MBMS en vue d'une sélection à l'aide d'un dispositif de commutation (40), la sélection étant effectuée par un moyen de déclencheur (42) en fonction de l'intensité du signal radio (28, 32) des services multimédia, **caractérisé par** le déclenchement de la commutation (40) par le moyen de déclencheur (42) en cas d'une certaine intensité de signaux radio reçus trop faible du module utilisé momentanément, et par la mémorisation d'un canal de programme reçu et l'interrogation et le réglage du canal de programme dans l'autre module correspondant après le processus de commutation effectué par des moyens (50) destinés à saisir et conserver un canal de programme.

7. Procédé pour terminal de radiotéléphonie mobile (14) dans un réseau de radiotéléphonie mobile (10) d'après le standard UMTS selon la revendication 6, **caractérisé en ce que** la commutation entre les modules (26, 30) des services multimédia s'effectue sans interruption à l'aide des étapes de procédé suivantes :
(a) Détecter l'intensité des signaux radio du service multimédia utilisé,
(b) Déterminer si l'intensité des signaux radio ainsi détectée se trouve inférieure à une valeur réglable ou fixe,
(c) Activer le module (26, 30) de l'autre service multimédia correspondant en cas d'intensité de signaux radio inférieure à cette valeur,
(d) Commuter le dispositif de commutation (40).

8. Procédé pour terminal de radiotéléphonie mobile (14) dans un réseau de radiotéléphonie mobile (10) d'après le standard UMTS selon l'une quelconque des revendications 6 ou 7, **caractérisé en ce que** les zones d'ombres de réception des signaux radio de l'émetteur (10, 34) correspondant utilisé du service multimédia sont localisées au moyen d'un système de détermination du lieu (44).
